# EUROPEAN PATENT SPECIFICATION

(11) **EP 1 120 596 B1**
(45) Date of publication and mention of the grant of the patent: **14.03.2007**
(21) Application number: 01200203.6
(22) Date of filing: 19.01.2001
(51) Int. Cl.: F16L 29/04

(54) **Emergency release coupling in response to strong axial traction**
Notauslösbare Kupplung infolge eines hohen axialen Zuges
Accouplement de secours en response à une forte traction axiale

(30) Priority: 24.01.2000 IT MI000078
(43) Date of publication of application: 01.08.2001
(73) Proprietor: Bormioli, Marina, 35100 Padova (IT); Bormioli, Lorenzo, 35100 Padova (IT)
(72) Inventor: Bormioli, Marina, 35100 Padova (IT); Bormioli, Lorenzo, 35100 Padova (IT)
(74) Representative: Mittler, Enrico

(56) References cited:
- WO-A-99/17044
- US-A- 5 365 973
- US-A- 5 546 986

## Description

The present invention concerns a coupling for hydraulic tubing with emergency uncoupling and hydraulic closing in conditions of strong axial traction.

There are known couplings for hydraulic tubing, particularly utilised in the oil field for the coupling of hoses in motion, for instance between a ship and another one, a ship and the mainland, a ship and an oil platform, in which possible strong axial traction stresses due to causes of any kind would be expected to automatically cause the uncoupling of the connection and the immediate interception of the hydraulic flow under course. In this way it is possible to prevent that an axial traction higher than the maximum limit bearable by the hosing can determine the deterioration of the same hosing.

In particular there are known couplings that are made up of two parts that are passed through by respective axial ducts, which are connected by rigid connection means that are suitable to allow the automatic separation of the aforesaid parts in the case of an axial traction higher than a predetermined limit. At least one of said parts comprises a means for the interception of the flow of fluid that is made up of a spherical segment valve that responds to the separation movement of the two parts of the coupling with a combined motion of rotation around an axis perpendicular to the longitudinal axis of the respective axial duct and of sliding along said longitudinal axis up to the attainment of a closing position.

A coupling of this type according to the preamble of claim 1 is described in WO-A-99/17044 and for the aforesaid spherical segment valve it provides for at least a mechanism of rotary-sliding operation comprising at least a sliding rack rod and at least a toothed segment that are co-operating from opposite sides with at least one toothed wheel that creates a driving hinge of said valve. There are provided elastic means that through a sliding disc thrust said rack rod towards a closing position of said valve, locking means that, when the coupling is coupled, keep said valve in opening position, and cylinders and piston means connected with said rack rod in order to control the feeding speed of said rack rod towards the closing position of said valve.

The aforesaid locking means are made up of a segment of duct fastened to the other part of the coupling or freely interposed between the two parts of the coupling, against which the spherical segment valve abuts when the coupling is coupled.

The use of said segment of duct for the locking of the valve into a closing position determines the requirement for two equally important measures: one is to avoid a discontinuity between said segment of duct and the axial ducts of the two parts of the coupling, so as to prevent that the fluid being transported invades the mechanisms responsible for the operation of the valve, consequently determining difficulty in movement, erosions, formation of rust and so on; another, not easy to combine with the previous one, is to assure that the aforesaid segment of duct brings itself in unlocking position before the closing movement of the valve has begun, so as to prevent mechanical interference between the two.

Object of the present invention is to realise a coupling of the aforementioned type that meets both of the aforesaid requirements.

According to the invention such object is attained with a coupling for hydraulic tubing that is made up of two parts of coupling that are passed through by respective axial ducts for the flow of fluid and are connected with each other by rigid coupling means that are suitable to allow the automatic separation of the same parts in case of an axial traction higher than a predetermined limit, at least one first part of the coupling comprising a means for the interception of the flow of fluid that is made up of a spherical segment valve that responds to the movement of separation of the two parts of the coupling with a combined motion of rotation around an axis perpendicular to the longitudinal axis of the respective axial duct and of sliding along said longitudinal axis up to the attainment of a closing position, said valve being provided with a rotary-sliding drive mechanism comprising at least one sliding rack rod and at least one toothed segment that are co-operating from opposite sides with at least one toothed wheel making up a driving hinge for said valve, and there being provided elastic means that thrust said rack rod toward a position suitable to determine the closing of said valve, locking means that, when the coupling is coupled, keep said valve in opening position, and resisting means connected with said rack rod in order to control the feeding speed of said rack rod towards the closing position of said valve, said locking means being made up of a ductsegment which is arranged as an extension of the axial duct of the first part of the coupling and against which said valve abuts when the coupling is coupled, characterised in that said duct segment is tightly set against said axial duct of the first part of the coupling, and said rack rod is suitable to operate on said duct segment in order to control its axial movement of expulsion from said first part of the coupling and in addition it is operatively connected with said valve in such a way as to control the beginning of its movement of closing only after that said axial movement of expulsion of the duct segment has determined the removal of the same duct segment from the path of the closing movement of said valve.

Owing to this expedient the transported fluid remains confined inside the duct destined to it and it does not involve the operating mechanisms of the valve and at the same time it assures that the duct segment that maintains the valve in opening condition does not interfere in any way with the closing movement of the same valve in case of an uncoupling determined by strong axial stresses.

Naturally, as already described in the previously recalled patent WO-A-99/17044, both parts of the coupling can be provided with a spherical segment valve with rotary-sliding movement with relative operating mechanism and in such case the characteristics that are described for the first part of the coupling must be repeated for the second part of the same coupling, that is the duct segment that is utilised for the locking of the valve of the second part of the coupling is positined in a similar way as regards the relative axial duct and it is also subjected to a movement of axial expulsion from said second part of the coupling before the aforesaid valve is controlled to execute a closing movement.

A coupling of the latter type is illustrated as a non-limiting example in the enclosed drawings, in which
Fig. 1 shows in axial section, in operating position; a coupling with two valves according to the present invention;
Fig. 2 shows the aforesaid coupling in longitudinal section according to the line II-II in Fig. 1;
Fig. 3 shows the same coupling in cross section according to the line III-III in Fig. 1;
Fig. 4 shows a magnified detail of the same coupling in section according to the line IV-IV in Fig. 1;
Figures 5, 6 and 7 show views similar to the ones in Figures 1, 2 and 4 at the beginning of the stage of emergency uncoupling of the two parts of the coupling;
Figures 8, 9 and 10 show views similar to the ones in Figures 1, 2 and 4 at the beginning of the subsequent stage of closing of the valves;
Figures 11, 12 and 13 show views similar to the ones in Figures 1, 2 and 4 at the end of the movement of closing of the valves.

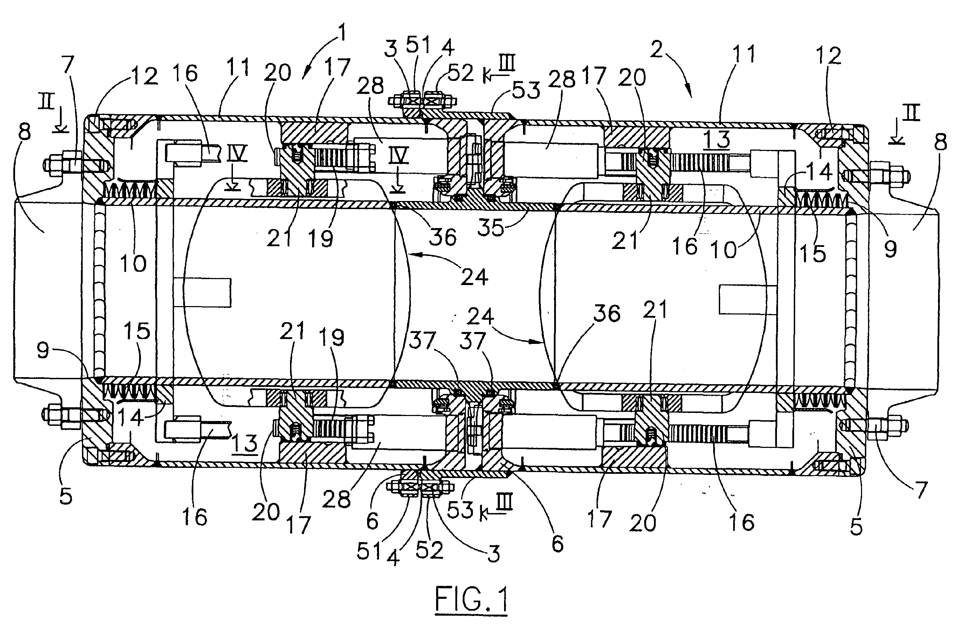

The coupling for tubing that is illustrated in the drawings is the two valves type and it comprises a first and a second part 1 and 2 that are fastenable to each other by means of a circumferencial series of fracture screws of 3 having an intermediate segment 4 with a reduced section and therefore weakened (Fig. 1).

Each of said parts 1 and 2 of the coupling comprises a first and a second the terminal flange 5 and 6, to the first one of which a respective tubing 8 is fastenable by means of screws 7 . From the same flange 5, in correspondence of its central hole 9, a cylindrical duct 10 defining an axial passage for the flow of fluid that flows through the coupling extends in opposite sense, axially aligned with said tubing 8. Coaxial to the duct 10 and outside of it a cylindrical coupling box 11 that has one end fastened to the flange 5 by means of screws 12 and that ends at the other end with the flange 6 still extends from the flange 5 .

To the coupling box 11 of the part of coupling 1 an external flange 51 is welded that, when the coupling is coupled, is set against a corresponding external flange 52 made up of solid piece with an annular band 53 welded around the terminal flange 6 of the part of coupling 2 and extending axially from it so as to surround the terminal flange 6 of the part of coupling 1 in sliding engagement. The fracture screws 3 are set as a connection of two external flanges 51 and 52.

In the annular space 13 defined between the duct 10 and the coupling box 11 a disc 14 is arranged in axially sliding way on the duct 10, that it is thrust toward the right (looking at Fig. 1) by a compression spring 15, possibly substitutable by several springs coaxial to each other.

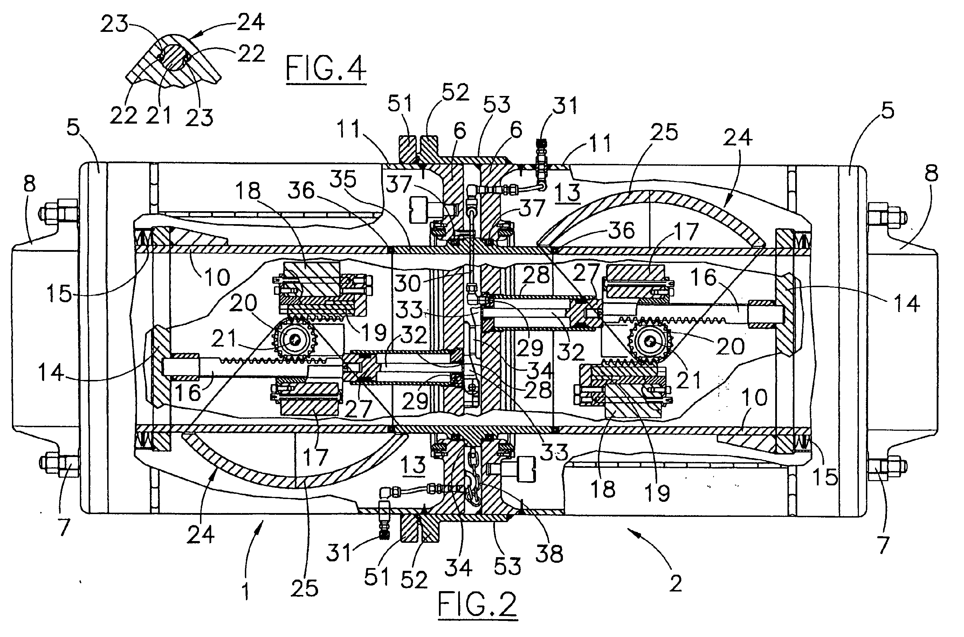

To the sliding disc 14 two rack rods 16 are symmetrically fastened (Figures 1 and 2), each one of which is slidingly held by a support 17 that is fastened inside the coupling box 12. A similar fixed support 18 bears a toothed segment 19 with possibility of a limited axial sliding (fig. 2). With the rack rods 16 and corresponding toothed segments 19 respective toothed gear wheels 20 engage that for effect of the aforesaid engagement are capable to rotate around respective hinges 21 that are aligned on a single axis perpendicular to the longitudinal axis of the duct 10 and of the coupling box 12 and passing through it, as also to slide parallel to said longitudinal axis.

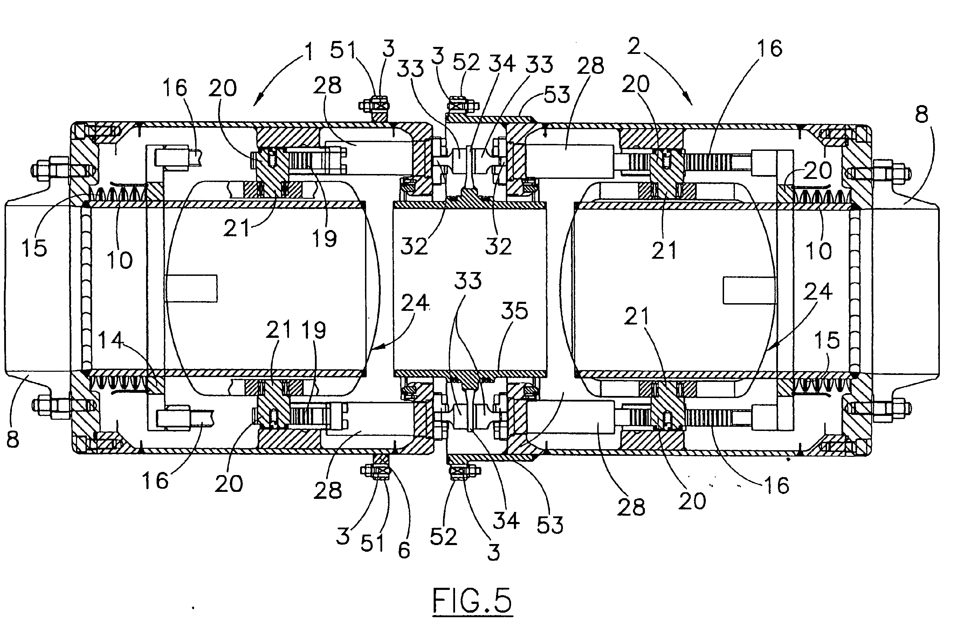

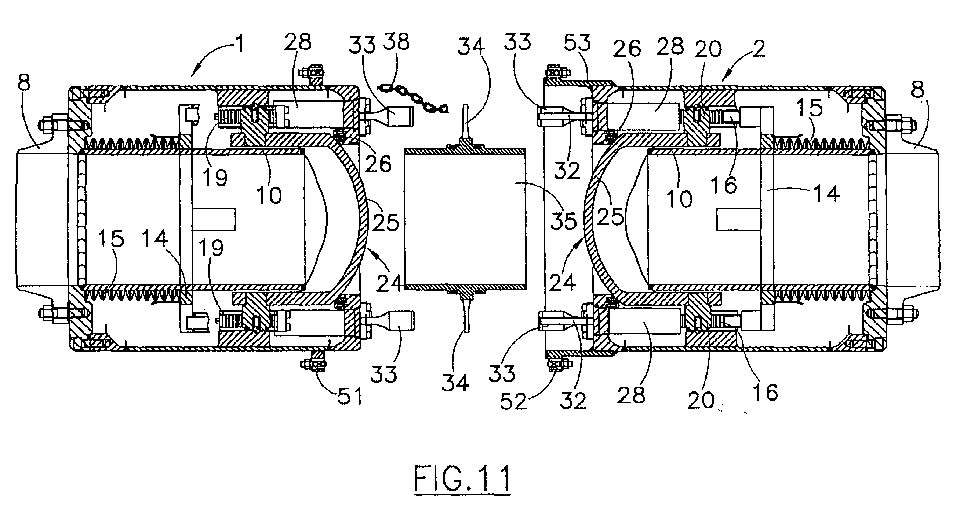

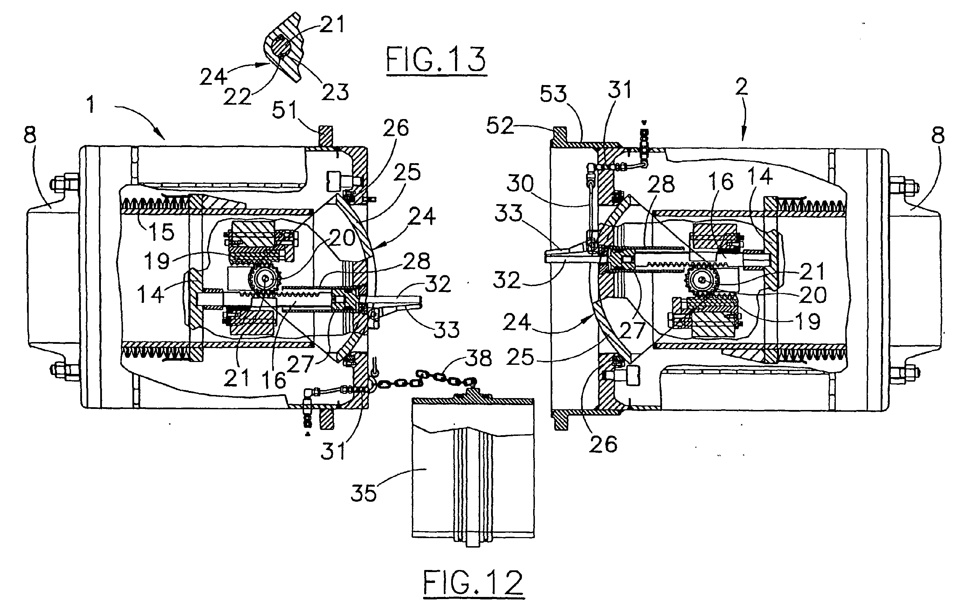

On the rotation hinges 21 of the toothed wheels 20, with a small angular clearance at an angle given by pins 22 inserted in peripheral cavities 23 of the hinges 21 (Fig. 4), a spherical segment valve 24 (1/4 of a sphere in the example herein reported) is hinged, than owing to the rotary-sliding motion of the toothed wheels 20 can be displaced from the opening position illustrated in Fig. 1 to the closing position illustrated in Figures 11 and 12. In this latter position the spherical back 25 of the valve is not only rotated perpendicular to the axis of the coupling but it is also pressed against one annular seal packing 26 that is embedded in a corresponding housing of flange 6.

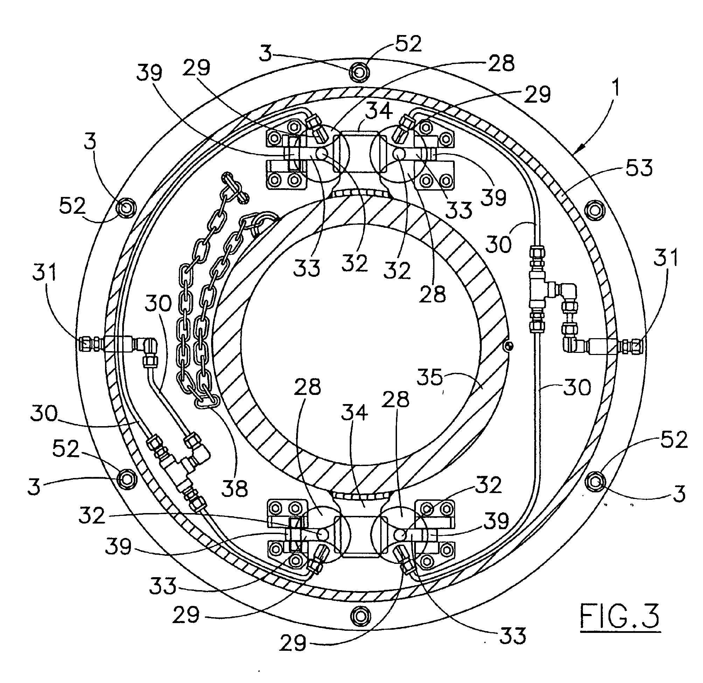

Each rack rod 16 ends with a piston 27 that is slidingly housed inside a respective cylinder 28 fastened to the flange 6. The cylinder 28 is normally filled with oil not in pressure, than in case of feeding of the piston 27 as regards the position of Fig. 1, as it will be better explained later, can protrude at a controlled speed through a gauged hole 29 that is connected by small tubes 30 to a lateral vent opening 31 (Figures 2 and 3).

From every piston 27 toward the flange 6 a stem 32 extends, that slidingly passes through the same flange 6 and engages with a lever 33 that has an end hinged in 39 on the external face of flange 6. The other end of lever 33 is in abutment engagement with a radial projection 34 of a segment of cylindrical duct 35 that, when the coupling is coupled, is placed in intermediate position between the ducts 10 of the two parts of the coupling and as axial connection of the same ducts 10, that is made watertight by the presence of the packings 36 (Figures 1 and 2). Additional packings 37 are interposed between the segment of duct 35 and the flanges 6 of the two parts of the coupling.

As shown in Fig. 2, the intermediate segment of duct 35, when the coupling is coupled, serves as a locking mean so as to keep the two valves 24 in an opening position.

A chain 38 keeps the segment of duct 35 coupled to the flange 6 of one of the two parts of the coupling (Figures 2 and 3).

The normal operating state of the coupling is the one illustrated in Figures 1, 2 and 3, where the fracture screws 3 hold the two parts 1 and 2 of the coupling together and therefore the two tubing 8, both valves 24 are open and maintained as such by their contrast with the cylindrical wall of the segment of duct 35 and the fluid being distributed can flow without any obstacle from one tubing 8 to the other through the axial passage defined by the two aligned cylindrical ducts 10 and by the intermediate segment of duct 35.

If in this condition one of the two tubing were to be subject to an axial traction stress higher than the allowed limit, the weakened parts 4 of the fracture screws 3 would break, thus allowing the mutual separation of two terminal flanges 6 from each other under the guidance of the sliding engagement realised between the annular band 53 of the second part of the coupling 2 and the terminal flange 6 of the first part of the coupling 1. The aforesaid guidance assures that the breaking of the screws 3 takes place only in case of strong traction stress, thus avoiding instead undesired breaks of the screws and consequent separations of the two parts of the coupling for fatigue of the same screws as a result of small and repeated bending strains between one part and the other of the coupling.

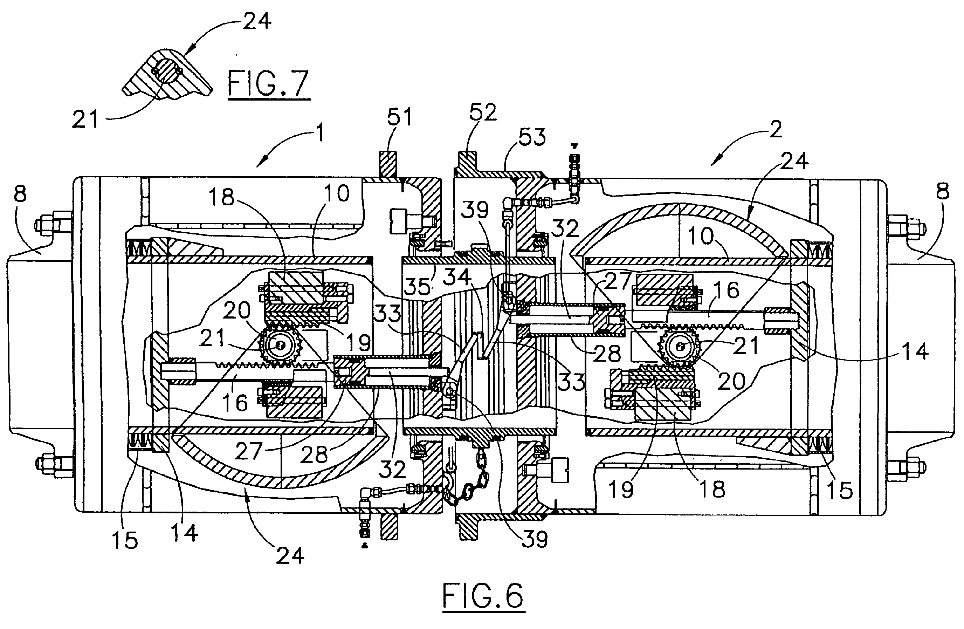

When this happens, under the thrust of the springs 15 the two sliding discs 14 force the racks 16 to move forward thus causing the subsequent feed of pistons 27 in the respective cylinders 28; the speed of the pistons 27 feed, and therefore of the racks 16, is controlled owing to gauged holes 29, that regulate the outflow of the oil from the cylinders 28. For effect of such feed the stems 32 force the levers 33 to rotate around their fulcrua 39 in order to separate the radial projections 34 of the intermediate segment of duct 35 from two flange the 6 and therefore to determine the expulsion of the segment of duct 35 from the two parts 1 and 2 of the coupling (figures 5 and 6).

During the first part of the feeding stroke of the racks 16 the sliding clearance existing between the toothed segments 19 and their supports 18 allows the toothed wheels 20 to rotate around their axis without sliding (Figures 5 and 6) and the rotational clearance existing between the toothed wheels 20 and the valves 24 prevents the rotation of the toothed wheels 20 from being transmitted to valves 24 (Fig. 7).

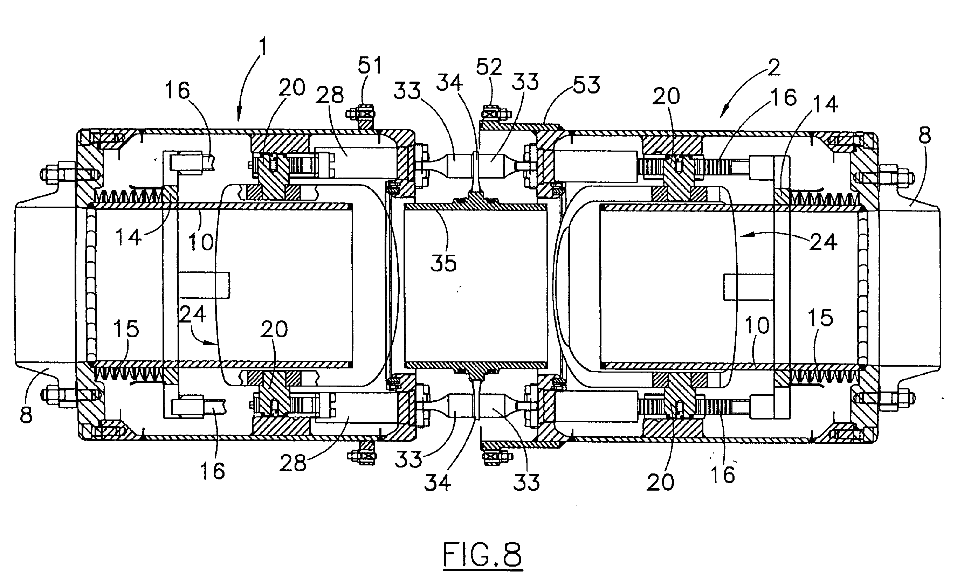

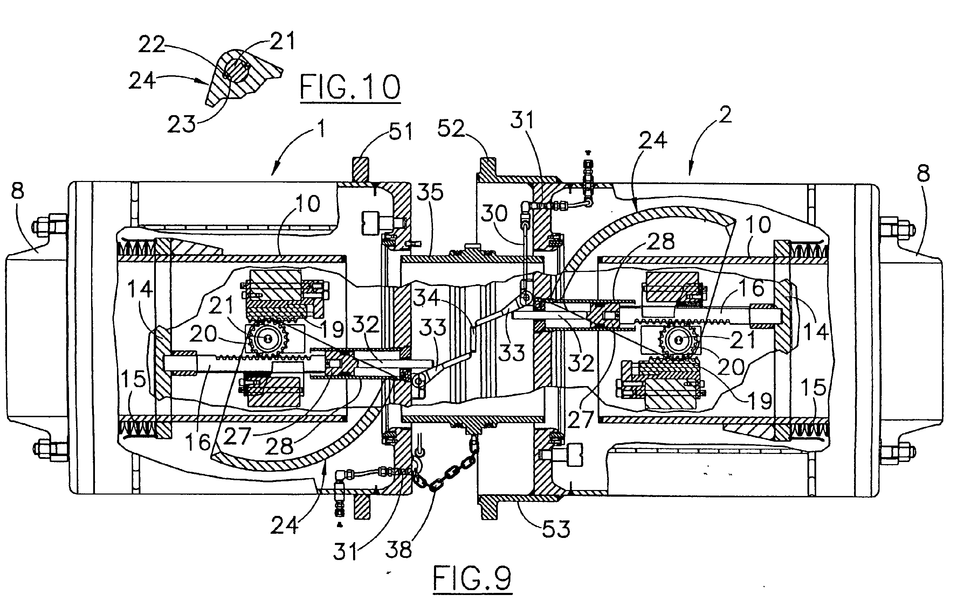

The subsequent feed of the racks 16, with the toothed segments 19 and the pins 22 that have already got to the end of the stroke and the intermediate segment of duct 35 substantially extracted from the two parts of coupling 1 and 2 (Figures 6 and 7), causes not only to the rotation but also the feed of the toothed wheels 20 and at the same time the rotation of the valves 24 and their sliding along the common axis of the ducts 10 (Figures 8-10).

The two valves 24 can therefore reach the position of closing and engagement with the packings 26 that is illustrated in Figures 11-13, without any possibility for the segment of duct 35 to interfere with their rotary-sliding movements. With two parts of the coupling 1 and 2 released and separate and the two valves 24 closed, the intermediate section of the duct 35 is kept attached to the part 1 of the coupling by the chain 38 (Fig. 12).

## Claims

1. Coupling for hydraulic tubing made up of two parts of coupling (1, 2) that are passed through by respective axial ducts (10) for the flow of fluid and connected with each other by rigid coupling means (3) that are suitable to allow the automatic separation of the same parts in the case of an axial traction higher than a predetermined limit, at least one first part (1, 2) of the coupling comprising means for the interception of the flow of fluid that are made up of a spherical segment valve (24) that responds to the movement of separation of two parts (1, 2) of the coupling with a combined motion of rotation around an axis perpendicular to the longitudinal axis of the respective axial duct (10) and of sliding along said longitudinal axis up to the attainment of a closing position, said valve (24) being provided with a rotary-sliding drive mechanism comprising at least one sliding rack rod (16) and at least one toothed segment (19) that are co-operating from opposite sides with at least one toothed wheel (20) that makes up a driving hinge (21) for said valve (24), and there being provided elastic means (15) that thrust said rack rod (16) towards a position that is suitable to determine the closing of said valve (24), locking means (35) that, when the coupling is coupled, keep said valve (24) in opening position, and resisting means (28, 27) connected with said rack rod (16) in order to control the feeding speed of said rack rod (16) toward the closing position of said valve (24), said locking means (35) being made up of a duct segment (35) that is arranged as an extension of the axial duct (10) of the first part of the coupling and against which said valve (24) abuts when the coupling is coupled, **characterised in that** said duct segment (35) is tightly set against said axial duct (10) of the first part of the coupling, and said rack rod (16) is suitable to operate on said duct segment (35) in order to control its axial movement of expulsion from said first part of the coupling and in addition is operationally connected with said valve (24) in such a way as to control the beginning of its closing movement only after said axial movement of expulsion of the duct segment (35) has determined the removal of the same duct segment (35) from the path of the closing movement of said valve (24).

2. Coupling according to claim 1, **characterised in that** said rack rod (16) operates on said duct segment (35) through a stem (32) that is fixedly mounted to said rack rod (16) and set against a lever (33) that is suitable to produce a movement of expulsion of said duct segment (35).

3. Coupling according to claim 2, **characterised in that** said resistance means (28, 27) comprise a piston (27) that is fastened to one end of said rack rod (16) and sliding inside a hydraulic cylinder (28) provided with a gauged hole (29) for the outflow of a hydraulic fluid that is normally not in pressure and is contained inside said cylinder (28), said stem (32) extending axially from said piston (27) inside said cylinder (28) in such way that, as a consequence of the feed of said rack rod (16), said stem (32) protrudes axially from said cylinder (28) in order to operate on said lever (33) for expulsion of said duct segment (35).

4. Coupling according to claim 1, **characterised in that** said toothed segment (19) is supported by a fixed support (18) with limited possibility of axial sliding clearance and said valve (24) is bound to said rotation hinge (21) of said toothed wheel (20) with limited possibility of rotational clearance, so that an initial part of the feeding movement of the rack rod (16) can determine only an axial sliding of said toothed segment (19) and a rotation of said toothed wheel (20) without a simultaneous sliding movement of said toothed wheel (20) and a simultaneous rotary and sliding movement of said valve (24) take place.

5. Coupling according to claim 1, **characterised in that** said elastic means (15) are made up of at least one compression spring (15) operating on a sliding disc (14) fastened to the other end of said rack rod (16).

6. Coupling according to claim 1, **characterised in that** said rigid coupling means (3) are made up of fracturable screws (3) with weakened intermediate section (4).

7. Coupling according to claim 6, **characterised in that** said fracturable screws (3) are set as a connection between an external flange (51) fastened to one of said parts (1, 2) of the coupling and another external flange (52) fastened to an external band (53) that is fastened to the other part of the coupling and extends axially from it so as to surround the opposite end of said part of the coupling in sliding engagement.

## Patentansprüche

1. Kupplung für hydraulische Leitungen, welche aus zwei Kupplungsteilen (1, 2) zusammengesetzt ist, durch welche zugeordnete axiale Leitungen (10) für die Fluidströmung gehen, und die mittels starrer Kupplungseinrichtungen (3) miteinander verbunden sind, welche derart geeignet ausgelegt sind, dass eine automatische Trennung dieser Teile im Falle einer axialen Zugbelastung ermöglicht wird, welche größer als ein vorbestimmter Grenzwert ist, wobei wenigstens ein erstes Teil (1, 2) der Kupplung eine Einrichtung zum Unterbrechen der Fluidströmung aufweist, welche von einem sphärischen Segmentventil (24) gebildet wird, welches auf die Trennungsbewegung der beiden Teile (1, 2) der Kupplung mit einer kombinierten Bewegung in Form einer Drehbewegung um eine Achse senkrecht zu der Längsachse der zugeordneten axialen Leitung (10) und einer Gleitbewegung längs der Längsachse bis zum Erreichen einer Schließposition anspricht, wobei das Ventil (24) mit einer Dreh-Gleit-Antriebseinrichtung versehen ist, welche wenigstens eine Gleitzahnstange (16) und wenigstens ein mit Zähnen versehenes Segment (19) aufweist, welches ausgehend von gegenüberliegenden Seiten mit wenigstens einem Zahnrad (20) zusammen arbeitet, welches ein Antriebsgelenk (21) für das Ventil (24) vervollständigt, und wobei eine elastische Dichtung (15) vorgesehen ist, welche die Zahnstange (16) in Richtung einer Position drückt, welche geeignet ist, das Schließen des Ventils (24) zu bestimmen, wobei eine Sperreinrichtung (35) vorgesehen ist, welche im Verbindungszustand der Kupplung das Ventil (24) in der Offenposition hält, und wobei eine Widerstandseinrichtung (28, 27) mit der Zahnstange (16) verbunden ist, um die Vorschubgeschwindigkeit der Zahnstange (16) in Richtung zu der Schließposition des Ventils (24) zu steuern, und wobei die Sperreinrichtung (35) von einem Leitungssegment (35) gebildet wird, welches als eine Verlängerung der axialen Leitung (10) des ersten Teils der Kupplung ausgelegt ist, und gegen weiches das Ventil (24) zur Anlage kommt, wenn die Kupplung gekoppelt ist, **dadurch gekennzeichnet, dass** das Leitungssegment (35) anliegend gegen die axiale Leitung (10) des ersten Teils der Kupplung angeordnet ist, und die Zahnstange (16) derart ausgelegt ist, dass sie das Leitungssegment (35) beaufschlagt, um die Axialbewegung beim Ausstoßen von dem ersten Teil der Kupplung zu steuern, und das zusätzlich betriebsmäßig mit dem Ventil (24) derart verbunden ist, dass der Beginn der Schließbewegung nur gesteuert wird, nachdem die Axialbewegung für das Ausstoßen des Leitungssegments (35) das Lösen des Leitungssegments (35) von dem Weg der Schließbewegung des Ventils (24) bestimmt hat,

2. Kupplung nach Anspruch 1, **dadurch gekennzeichnet, dass** die Zahnstange (16) das Leitungssegment (35) über eine Stange (32) beaufschlagt, welche fest an der Zahnstange (16) angebracht ist, und die gegen einen Hebel (33) anliegt, welcher in geeigneter Weise eine Ausstoßbewegung des Leitungssegments (35) erzeugen kann,

3. Kupplung nach Anspruch 2, **dadurch gekennzeichnet, dass** die Widerstandseinrichtung (28, 27) einen Kolben (27) aufweist, welcher fest mit einem Ende der Zahnstange (36) verbunden und im innern eines Hydraulikzylinder (28) gleitbeweglich ist, welcher mit einer geeichten Öffnung (29) für das Ausströmen eines Hydraulikfluids (10) versehen ist, welches im Grundzustand nicht unter Druck steht, und im Innern des Zylinders (28) enthalten ist, dass die Stange (32) sich axial von dem Kolben (27) in das Innere des Zylinders (28) derart erstreckt, dass infolge der Vorschubbewegung der Zahnstange (16) die Stange (32) axial von dem Zylinder (28) vorsteht, um den Hebel (33) zum Ausstoßen des Leitungssegments (35) zu beaufschlagen,

4. Kupplung nach Anspruch 1, **dadurch gekennzeichnet, dass** das mit Zähnen versehene Segment (19) mittels einer festen Abstützung (18) gelagert ist, welche in begrenztem Maße ein axiales Gleitspiel zulässt, und dass das Ventil (24) mit dem Drehgelenk (21) des Zahnrads (20) mit einer begrenzten Möglichkeit eines Drehspiels derart gekoppelt ist, dass bei einem Anfangsteil der Vorschubbewegung der Zahnstange (16) nur eine axiale Gleitbewegung des Zahnsegments (19) und eine Drehbewegung des Zahnrads (20) ohne eine gleichzeitige Gleitbewegung des Zahnrads (20) ausgeführt werden kann, und dass gleichzeitig eine Dreh- und Gleitbewegung des Ventils (24) erfolgt

5. Kupplung nach Anspruch 1, **dadurch gekennzeichnet, dass** die elastische Einrichtung (15) von wenigstens einer Druckfeder (15) gebildet wird, welche eine Gleitscheibe (14) beaufschlagt, welche fest mit dem andern Ende der Zahnstange (16) verbunden ist.

6. Kupplung nach Anspruch 1, **dadurch gekennzeichnet, dass** die starre Kupplungseinrichtung (3) von brechbaren Schrauben (3) mit einem geschwächten Zwischenabschnitt (4) gebildet wird.

7. Kupplung nach Anspruch 6, **dadurch gekennzeichnet, dass** die brechbaren Schrauben (3) als eine Verbindung zwischen einem externen Flansch (51), welcher fest mit einem der Teile (1, 2) der Kupplung verbunden ist, und einem weiteren externen Flansch (52) vorgesehen sind, welcher fest mit einem externen Flansch (53) verbunden ist, welcher fest mit dem anderen Teil der Kupplung verbunden ist, und sich axial von diesem derart erstreckt, dass das gegenüberliegende Ende des Teils der Kupplung bei der Gleitbewegung umgeben ist

## Revendications

1. Accouplement pour un tubage hydraulique constitué de deux parties d'accouplement (1, 2) qui sont traversées par des conduits axiaux respectifs (10) pour l'écoulement d'un fluide et connectées l'une à l'autre par des moyens d'accouplement rigides (3) appropriés pour permettre la séparation automatique desdites parties en cas de traction axiale supérieure à une limite prédéterminée, au moins une première partie (1, 2) de l'accouplement comprenant des moyens pour intercepter l'écoulement de fluide constitués d'une soupape à segment sphérique (24) qui répond au déplacement de séparation des deux parties (1, 2) de l'accouplement avec un mouvement de rotation combiné autour d'un axe perpendiculaire à l'axe longitudinal du conduit axial respectif (10) et en coulissant le long dudit axe longitudinal jusqu'à atteindre une position fermée, ladite soupape (24) comprenant un mécanisme d'entraînement coulissant - rotatif comprenant au moins une crémaillère coulissante (16) et au moins un segment denté (19) qui coopèrent à partir de côtés opposés avec au moins une roue dentée (20) constituant une charnière d'entraînement (21) pour ladite soupape (24), dans lequel des moyens élastiques (15) sont prévus pour pousser ladite crémaillère (16) vers une position appropriée pour déterminer la fermeture de ladite soupape (24), des moyens de verrouillage (35) qui, lorsque l'accouplement est accouplé, maintiennent ladite soupape (24) dans une position ouverte, et des moyens de résistance (28, 27) connectés à ladite crémaillère (16) pour commander la vitesse d'entraînement de ladite crémaillère (16) vers la position fermée de ladite soupape (24), lesdits moyens de verrouillage (35) étant constitués d'un segment de conduit (35) agencé comme une extension du conduit axial (10) de la première partie de l'accouplement et contre lequel ladite soupape (24) bute lorsque l'accouplement est accouplé, **caractérisé en ce que** ledit segment de conduit (35) est en contact intime avec ledit conduit axial (10) de la première partie de l'accouplement, et ladite crémaillère (16) est appropriée pour agir sur ledit segment de conduit (35) pour commander son déplacement axial d'expulsion à partir de la première partie de l'accouplement, et est en outre connecté de façon opérationnelle à ladite soupape (24) de manière à commander le commencement de son déplacement de fermeture uniquement après que ledit déplacement axial d'expulsion du segment de conduit (35) a déterminé l'enlèvement du même segment de conduit (35) du chemin du déplacement de fermeture de ladite soupape (24).

2. Accouplement selon la revendication 1, **caractérisé en ce que** ladite crémaillère (16) agit sur ledit segment de conduit (35) à travers une tige (32) qui est montée fixement sur ladite crémaillère (16) et appuie contre un levier (33) qui est approprié pour produire un déplacement d'expulsion dudit segment de conduit (35).

3. Accouplement selon la revendication 2, **caractérisé en ce que** lesdits moyens de résistance (28, 27) comprennent un piston (27) qui est attaché à une extrémité de ladite crémaillère (16) et coulisse à l'intérieur d'un cylindre hydraulique (28) comportant un trou calibré (29) pour la sortie du débit d'un fluide hydraulique qui n'est normalement pas pressurisé et qui est contenu à l'intérieur dudit cylindre (28), ladite tige (32) s'étendant axialement à partir dudit piston (27) à l'intérieur dudit cylindre (28) de telle sorte que, à la suite de l'arrivée de ladite crémaillère (16), ladite tige (32) fasse saillie axialement hors dudit cylindre (28) pour agir sur ledit levier (33) pour expulser ledit segment de conduit (35).

4. Accouplement selon la revendication 1, **caractérisé en ce que** ledit segment denté (19) est supporté par un support fixe (18) avec une possibilité limitée de jeu de coulissement axial, et ladite soupape (24) est attachée à ladite charnière de rotation (21) de ladite roue dentée (20) avec une possibilité limitée de jeu de rotation, de telle sorte qu'une partie initiale du déplacement d'entraînement de la crémaillère (16) peut déterminer seulement un coulissement axial dudit segment denté (19) et une rotation de ladite roue dentée (20) sans qu'un déplacement coulissant simultané de ladite roue dentée (20) et qu'un déplacement coulissant et rotatif simultané de ladite soupape (24) se produisent.

5. Accouplement selon la revendication 1, **caractérisé en ce que** lesdits moyens élastiques (15) sont constitués d'au moins un ressort de compression (15) agissant sur un disque coulissant (14) attaché à l'autre extrémité de ladite crémaillère (16).

6. Accouplement selon la revendication 1, **caractérisé en ce que** lesdits moyens d'accouplement rigide (3) sont constitués de vis fracturables (3) présentant une section intermédiaire affaiblie (4).

7. Accouplement selon la revendication 6, **caractérisé en ce que** lesdites vis fracturables (3) sont posées comme une connexion entre une bride externe (51) attachée à une desdites parties (1, 2) de l'accouplement et une autre bride externe (52) attachée à une bande extérieure (53) qui est attachée à l'autre partie de l'accouplement et s'étend axialement à partir de celle-ci de manière à entourer l'extrémité opposée de ladite partie de l'accouplement dans un engagement coulissant.
